Europäisches Patentamt

European Patent Office

Office européen des brevets

(19)

(11) Numéro de publication : **0 439 390 A1**

## (12) DEMANDE DE BREVET EUROPEEN

(21) Numéro de dépôt : **91400107.8**

(22) Date de dépôt : **18.01.91**

(51) Int. Cl.⁵ : **B60S 1/38**

(30) Priorité : **19.01.90 FR 9000632**

(43) Date de publication de la demande :
**31.07.91 Bulletin 91/31**

(84) Etats contractants désignés :
**DE ES GB IT**

(71) Demandeur : **VALEO SYSTEMES D'ESSUYAGE**
**11, rue Faraday**
**F-78180 Montigny-Le-Bretonneux (FR)**

(72) Inventeur : **Oulie, Michel**
**10, rue Georges Brassens**
**F-63500 Issoire (FR)**

(74) Mandataire : **Gamonal, Didier**
**Société VALEO Service Propriété Industrielle**
**30, rue Blanqui**
**F-93406 Saint Ouen (FR)**

(54) **Lame d'essuie-glace et balai d'essuie-glace équipé d'une telle lame.**

(57)    Une lame d'essuie-glace, notamment pour véhicule automobile, est constituée d'un lèvre d'essuyage (2) et au moins d'un élément de raidissement (3) de ladite lèvre.

Selon l'invention un moyen à emboîtant mutuel par clipage (12,16) est prévu entre la lèvre d'essuyage (2) et l'élément de raidissement (3).

Fig. 1

EP 0 439 390 A1

# LAME D'ESSUIE-GLACE ET BALAI D'ESSUIE-GLACE EQUIPE D'UNE TELLE LAME

L'invention se rapporte à une lame d'essuie-glace et à un balai d'essuie-glace équipé d'une telle lame.

Les lames d'essuie-glaces connues à ce jour sont constituées d'une lèvre d'essuie-glace en matière caoutchouteuse et d'au moins un élément de raidissement de ladite lèvre.

La lèvre d'essuie-glace se compose habituellement d'une embase munie de deux paires de cavités parallélépipèdiques longitudinales disposées de part et d'autre de cette embase, l'une des deux paires de cavités servant de réception à un élément de raidissement consistant, soit en deux lames métalliques longitudinalement disposées de part et d'autre de l'embase, soit en une baguette qui recouvre la partie supérieure de l'embase en ayant ses bords libres coopérant avec la paire de cavités précitée, et l'autre des paires de cavités, disposées à un niveau inférieur à celui de la paire de cavités susmentionnée, servant à la réception des griffes de maintien que présente habituellement la monture du balai pour porter la lame d'essuie-glace.

Cette embase se poursuit par un élément frotteur s'appuyant sur une surface à essuyer en étant relié à l'embase par une zone à charnière pour permettre un mouvement relatif dudit élément frotteur par rapport à ladite embase.

Il a été constaté que de telles lames d'essuie-glace présentaient quelques inconvénients.

Ainsi, les opérations de montage et de fabrication sont des opérations compliquées et onéreuses. En effet dans le cas où il est utilisé des lames métalliques en tant qu'élément de raidissement ces lames métalliques subissent généralement un traitement chimique de façon à les rendre inoxydables et il est nécessaire de prévoir sur l'embase et/ou sur les lames métalliques des moyens d'immobilisation de l'une par rapport aux autres de manière à éviter leur séparation dans la suite du processus opératoire.

De même, dans le cas où l'élément de raidissement consiste en une baguette, des moyens d'immobilisation sont prévus entre la baguette et l'embase pour pouvoir poursuivre les opérations de montage.

En outre, il est évident que les opérations de montage sont complexes du fait, d'une part, du montage de l'élément de raidissement dans les cavités prévues à cet effet et, d'autre part, de la nécessité d'utiliser des moyens d'immobilisation entre l'élément de raidissement et la lèvre d'essuie-glace.

La présente invention se propose de remédier aux inconvénients mentionnés ci-dessus en présentant une lame d'essuie-glace de conception très simple et de coût relativement bas.

Selon la présente invention, la lame d'essuie-glace, notamment pour véhicule automobile, comprenant une lèvre d'essuyage et au moins un élément de raidissement de ladite lèvre, est caractérisée en ce qu'un moyen à emboîtement mutuel par clipage est prévu entre l'élément de raidissement et la lèvre d'essuyage.

Grâce à l'invention, l'élément de raidissement est immobilisé par rapport à la lèvre d'essuie-glace, et le reste des opérations de montage peut se poursuivre sans se préoccuper d'une éventuelle séparation de ces deux éléments.

Les autres caractéristiques et avantages ressortiront de la description qui va suivre, donnés à titre d'exemple, et en se référant aux dessins annexés sur lequels :

    – la figure 1 est une vue en coupe transversale schématique montrant le profil de la lame ;

    – la figure 2 est une vue partielle montrant l'un des éléments de la lame d'essuie-glace ;

    – la figure 3 est une variante de réalisation de l'invention ;

    – la figure 4 est une vue longitudinale partielle de la lame d'essuie-glace portée par un élément d'une monture ;

    – la figure 5 est une vue de dessus selon la figure 4.

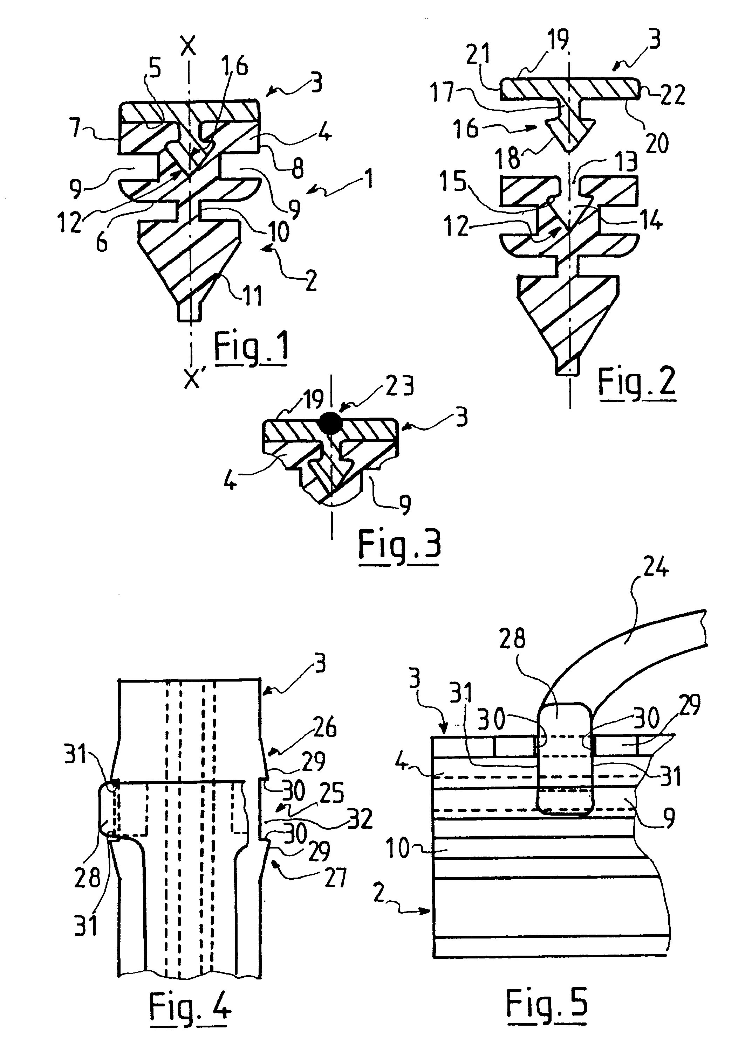

En se référant aux figures 1 et 2, la lame d'essuie-glace 1 est constituée d'une lèvre d'essuie-glace 2 et d'un élément de raidissement 3 de ladite lèvre.

La lèvre 3 est constituée d'une embase 4 se présentant, dans l'exemple décrit, sous une forme généralement parallélépipèdique à faces horizontales 5,6 et à faces verticales 7,8.

A partir de chaque face verticale est prévue une cavité longitudinale 9 également parallélépipèdique à flanc ouvert sur ladite face et dont le rôle sera explicité plus loin.

La face horizontale inférieure 6 de l'embase se poursuit par une zone charnière 10 reliée à un élément frotteur 11 apte à venir essuyer, de manière connue en soi, une surface vitrée, tel qu'un pare-brise de véhicule automobile.

A partir de la face horizontale supérieure 5 de l'embase 4 est prévu, dans le corps de ladite embase, une creusure longitudinale 12 s'étendant tout au long de l'embase et dont l'axe général vertical est confondu avec l'axe général vertical X-X' de la lèvre 2.

Cette creusure a en section une forme sensiblement de flèche et se compose d'un premier évidement 13 de forme parallélépipèdique longitudinal se poursuivant, en direction de l'élément frotteur 11, par un second évidement 14 en forme de prisme triangulaire dont la grande base 15 est de dimension plus grande que la dimension de la face de l'évidement 13 avec laquelle elle est confondue et dont la pointe est dirigée vers l'élément frotteur 11 en étant situé en retrait par rapport à la zone charnière 10.

Cette creusure longitudinale 12 est apte à coopérer par emboîtement à clipage avec une saillie 16 de forme, de dimensions et de direction identiques à celles de ladite creusure, c'est-à-dire présentant un premier volume plein 17 de forme parallélépipèdique se poursuivant par un deuxième volume plein 18 en forme de prisme triangulaire.

La saillie 16 est portée par l'élément de raidissement 3 qui est composé d'une matière plus rigide que celle de la matière constitutive de la lèvre 2 et pouvant être par exemple un polymère thermoplastique, ledit élément raidisseur 3 présente une forme parallélépipèdique longitudinale à faces horizontales 19,20 et à faces verticales 21,22, la saillie 16 étant issue de la face horizontale inférieure 20, ledit élément de raidissement s'étendant tout au long de la lèvre 2 en s'appuyant par sa face horizontale 20 sur la face horizontale 5 de l'embase 4.

La saillie 16 portée par l'élément raidisseur 3 est de préférence moulée de manière monobloc avec ledit élément, mais il peut être envisagé que cette saillie soit rapportée sur la face 5 de l'élément de raidissement 3 par tous moyens appropriés tels que collage, soudage, clipage ou autres.

Pour réaliser la lame d'essuie-glace par assemblage par clipage de la lèvre 2 et de l'élément de raidissement 3, il suffit de faire pénétrer la saillie 16 dans la creusure 12 de l'embase 4 de manière à ce que le volume plein 18 en forme de pointe de flèche de la saillie 12 écarte les parois verticales du premier évidement 13 jusqu'à ce que la grande base 15 du volume prismatique 18 soit en concordance avec la grande base de l'évidement prismatique 14, la coopération des deux grandes bases empêchant une éventuelle séparation de l'élément de raidissement et de la lèvre d'essuie-glace, élément de raidissement s'appuyant d'autre part par sa face horizontale inférieure 20 sur la face horizontale supérieure 5 de l'embase 4.

Ainsi on obtient un assemblage à emboîtement par clipage entre l'élément de raidissement 3 et la lèvre 2, cet assemblage étant particulièrement sûr du fait de la coopération des deux grandes bases assurant le verrouillage de la lèvre 2 par rapport à l'élément de raidissement 3.

Il peut être prévu, pour assurer une sécurité supplémentaire de l'assemblage, de disposer, avant assemblage, un cordon de colle au niveau de la pointe de l'évidement prismatique 14 de façon à ce que, lors de la pénétration du volume prismatique 18 dans cet évidement, la colle se répartisse régulièrement le long des parois du volume et évidement prismatiques 14,18.

De même il peut être envisagé de disposer suffisamment de colle dans l'évidement prismatique 14 de manière à ce que la colle puisse remonter non seulement le long des parois des volumes et évidement prismatique, mais aussi le long des parois du volume et évidement parallélépipèdiques 13,17.

Bien entendu et cela sans sortir du cadre de l'invention, la saillie 16 peut s'étendre tout au long de la lèvre 2 ou bien ne s'étendre que par parties par exemple régulièrement réparties le long de ladite lèvre.

On se réfère maintenant à la figure 3 qui montre une variante de réalisation de l'invention.

Dans cette variante de réalisation, l'élément de raidissement 3 comporte un renfort 23 métallique ou composite.

Ce renfort est disposé dans l'élément de raidissement 3 et plus précisément dans l'axe de symétrie de manière à empêcher le fluage de l'élément de raidissement lors de son fonctionnement avec la lèvre 2 en formant la lame d'essuie-glace.

Comme mieux visible sur la figure 3, le renfort 23 a une forme de cylindre longitudinal plein pouvant s'étendre en totalité ou partiellement le long de l'élément de raidissement 3 mais il peut être envisagé tout autre forme possible telle qu'une forme en lame ou autre.

Ce renfort est solidarisé avec l'élément de raidissement 3 par toute technique appropriée, tels que collage, clipage et dans le cas où cet élément de raidissement est extrudé le renfort peut être coextrudé avec celui-ci.

On se réfère maintenant aux figures 4 et 5 qui montrent la disposition de la lame d'essuie-glace, selon l'invention, sur une monture 24, de manière à former un balai d'essuie-glace, les figures 4 et 5 représentant qu'un seul élément de cette monture, appelée plus communément palonnier portant des griffes 28 aptes à coopérer avec les cavités 9 de la lèvre 2 de manière à porter la lame d'essuie-glace.

Pour ce faire, il est prévu de disposer sur chaque face verticale 22,23 de l'élément de raidissement 3 un moyen d'immobilisation en translation 25 entre la monture 24 et la lame, moyen consistant en deux appendices 26,27 saillants vers l'extérieur et à distance l'un de l'autre, en étant opposés l'un à l'autre, la distance entre les deux appendices étant au moins égale à la largeur de la griffe 28 de l'élément 24 de la monture du balai.

Ces saillies ont, comme visible sur la figure 4, une forme triangulaire dont l'hypothénuse 29 du triangle sert de rampe de glissement pour les griffes 28 lors du montage et dont le petit côté 30 du triangle forme une butée apte à venir en contact avec la face correspondante transversale 31 de la griffe 28.

Ainsi, lors du montage, les griffes 28 de l'élément 24 de la monture pénètrent en glissant dans les cavités longitudinales 9 prévues sur l'embase 4 jusqu'à venir en contact avec la rampe 29 de l'appendice saillant 26 ou 27 et, en continuant le mouvement, lesdites griffes sont emprisonnées dans l'espace 32 libre entre les deux butées 30.

La présente invention n'est pas limitée aux exemples de réalisation décrits mais englobe toute variante.

Notamment l'élément de raidissement 3 peut avoir en section toute autre forme, notamment celle en U dans laquelle les ailes du U viendraient coopérer en partie avec les faces verticales 7,8 de l'embase 4.

De plus, la forme de la creusure centrale 12 et de la saillie 16 peut être tout autre, telle que celle dans laquelle, à partir d'un élément central vertical s'érige une multiplicité de formes triangulaires.

## Revendications

1. Lame d'essuie-glace, notamment pour véhicule automobile, comprenant une lèvre d'essuie-glace (2) et au moins un élément de raidissement (3) de ladite lèvre, caractérisée en ce qu'un moyen à emboîtement mutuel par clipage (12,16) est prévu entre l'élément de raidissement (3) et la lèvre d'essuie-glace (2).

2. Lame d'essuie-glace selon la revendication 1, caractérisée en ce que le moyen à emboîtement mutuel consiste en une saillie (16) portée par l'élément de raidissement (3) s'emboîtant avec une creusure complémentaire (12) portée par la lèvre d'essuie-glace (2).

3. Lame d'essuie-glace selon la revendication 1 ou 2, caractérisée en ce que la saillie (16) est issue de l'élément de raidissement (3) disposé sur l'embase (4) que présente la lèvre d'essuyage (2).

4. Lame d'essuie-glace selon l'une des revendications 1 à 3, caractérisée en ce que la saillie (16) présente, en section, une forme de flèche constituée d'un premier volume parallélépipèdique (17) et un deuxième volume prismatique triangulaire (18).

5. Lame d'essuie-glace selon la revendication 4, caractérisée en ce que l'embase (4) porte une creusure (12) de forme complémentaire à celui de la saillie (16).

6. Lame d'essuie-glace selon l'une des revendications 1 à 5, caractérisée en ce que l'élément de raidissement (3) porte un renfort (23).

7. Balai d'essuie-glace portant la lame d'essuie-glace selon l'une des revendications 1 à 6 par l'intermédiaire d'une monture (24), caractérisé en ce que l'élément de raidissement (3) porte des moyens d'immobilisation (25) par rapport à la monture (24).

8. Balai d'essuie-glace selon la revendication 7, caractérisé en ce que les moyens d'immobilisation (25) consistent en deux appendices saillants (26,27) à partir de l'élément de raidissement (3).

9. Balai d'essuie-glace selon la revendication 8, caractérisé en ce que les appendices (26,27) présentent chacun une rampe de glissement (29) pour les griffes (28) de la monture (24).

10. Procédé d'assemblage pour réaliser la lame d'essuie-glace selon l'une des revendications 1 à 6, caractérisé en ce que dans la creusure (12) est disposé un cordon de colle de façon à ce que, lors de l'introduction de la saillie (16) de l'élément de raidissement (3), une liaison par collage soit faite entre la creusure (12) et la saillie (16).

Fig. 1

Fig. 2

Fig. 3

Fig. 4

Fig. 5

EP 0 439 390 A1

## Office européen des brevets

## RAPPORT DE RECHERCHE EUROPEENNE

Numero de la demande

EP    91 40 0107

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | DE-A-2324702 (SWF)<br>* page 4, lignes 1 - 16; figures 1, 2 *<br>---- | 1, 4, 6,<br>7 | B60S1/38 |
| Y | FR-A-2168837 (CARELLO)<br>* page 3, ligne 5 - page 4, ligne 27; figures 1,<br>2, 5 * | 1, 4 | |
| A | ---- | 2, 5 | |
| Y | US-A-3107384 (WISE)<br>* le document en entier * | 1, 6, 7 | |
| A | ---- | 2 | |
| A | US-A-3541629 (QUINLAN ET AL.)<br>* colonne 2, ligne 52 - colonne 3, ligne 65;<br>figures 1, 20 *<br>---- | 1, 7-9 | |
| A | GB-A-2051563 (THE ANDERSON COMPANY)<br>* page 1, ligne 119 - page 2, ligne 25 *<br>* page 2, lignes 37 - 73 *<br>* page 3, lignes 15 - 62; figures 1, 3a *<br>---- | 1, 7-9 | |
| A | DE-A-3337815 (TRANT)<br>----- | | DOMAINES TECHNIQUES RECHERCHES (Int. Cl.5)<br><br>B60S |

Le présent rapport a été établi pour toutes les revendications

| Lieu de la recherche | Date d'achèvement de la recherche | Examinateur |
|---|---|---|
| LA HAYE | 29 AVRIL 1991 | VERLEYE J. |